(19) Europäisches Patentamt
European Patent Office
Office européen des brevets

(11) Publication number: **0 351 098 B1**

(12) **EUROPEAN PATENT SPECIFICATION**

(45) Date of publication of patent specification :
**29.01.92 Bulletin 92/05**

(51) Int. Cl.⁵ : **F16D 27/112**

(21) Application number : **89306584.7**

(22) Date of filing : **29.06.89**

(54) **Electromagnetic clutch.**

(30) Priority : **11.07.88 JP 90907/88**

(43) Date of publication of application :
**17.01.90 Bulletin 90/03**

(45) Publication of the grant of the patent :
**29.01.92 Bulletin 92/05**

(84) Designated Contracting States :
**DE FR GB IT SE**

(56) References cited :
**DE-A- 1 775 272**
**DE-C- 179 372**
**FR-A- 1 102 152**
**US-A- 3 371 758**
**US-A- 3 565 223**

(73) Proprietor : **SANDEN CORPORATION**
**20 Kotobuki-cho**
**Isesaki-shi Gunma, 372 (JP)**

(72) Inventor : **Shimura, Keiichi**
**281-1 Kaminaka Nitta-machi**
**Nitta-gun Gunma 370-03 (JP)**

(74) Representative : **Jackson, Peter Arthur et al**
**Gill Jennings & Every, 53-64 Chancery Lane**
**London WC2A 1HN (GB)**

Jouve, 18, rue Saint-Denis, 75001 PARIS

# Description

The present invention generally relates to an electromagnetic clutch, such as for use in controlling the transmission of power from an automobile engine to a refrigerant compressor in an automotive air conditioning system, and more particularly, to an electromagnetic clutch having an improved structure for reducing metallic collision and noise.

Generally, electromagnetic clutches for use in automotive air conditioning systems experience a common problem in that during each engagement of such a clutch, the metallic surfaces of the engaging rotor and armature plate make contact with each other and create a loud, offensive noise for passengers in the automobile. This problem occurs because the friction surfaces of the two engaging parts cannot be perfectly aligned in parallel. Consequently, at the initial moment of engagement, the radial outermost surface of one of the engaging parts contacts the radial outermost surface of the other part. In the prior art, these outermost contacting surfaces are metallic and, therefore, a loud noise is created.

For example, as illustrated in Figure 1, U.S. Patent No. 4,553,690 discloses one type of well-known electromagnetic clutch that includes a plurality of leaf springs 27 to transfer rotational force from clutch rotor 15 to annular armature plate 26 as annular armature plate 26 engages clutch rotor 15. When the electromagnetic clutch is engaged, the rotational force is transferred via the clutch system to drive shaft 13 of the compressor (not shown). However, at the initial instant of engagement, the radial outermost, metallic surfaces of armature plate 26 and clutch rotor 15 collide.

Specifically, in a system such as that described in above-mentioned U.S. Patent No. 4,553,690, electromagnetic clutch 10 is connected to a refrigerant compressor (not shown) for an automotive air conditioning system. Electromagnetic clutch 10 is disposed on an outer peripheral portion of cantilevered tubular extension 12 which projects from an end surface of compressor housing 11. Tubular extension 12 surrounds compressor drive shaft 13. Drive shaft 13 is rotatably supported in compressor housing 11 by bearings (not shown).

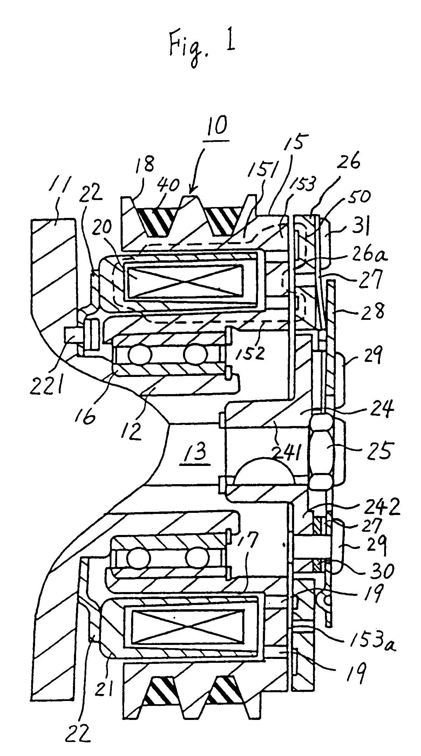

Electromagnetic clutch 10 includes clutch rotor 15 which is rotatably supported on tubular extension 12 through bearing 16 which is mounted onto the outer surface of tubular extension 12. Clutch rotor 15 is made of a magnetic material such as steel, and includes outer annular cylindrical portion 151, inner annular cylindrical portion 152, and axial end plate portion 153 which is connected to outer and inner cylindrical portions 151 and 152 at the axial forward end (right side in Figure 1). Annular U-shaped cavity 17 is defined between portions 151, 152 and 153. A plurality of V-shaped grooves 18 are disposed on the outer peripheral surface of outer annular cylindrical portion 151, for receiving belt 40 which couples the compressor to the output of an automobile engine (not shown).

Axial end plate portion 153 includes one or more concentric slits 19 which are disposed on one or more concentric circles. Slits 19 define a plurality of annular or arcuate magnetic sections with their poles located at the surface of axial end plate portion 153.

Electromagnetic coil 20 is disposed in annular U-shaped cavity 17 of clutch rotor 15 to generate magnetic flux 50 for attracting armature plate 26 to axial end plate portion 153. Coil 20 is contained within annular magnetic housing 21 which has a U-shaped cross section. Magnetic housing 21 is fixed to support plate 22, which is secured to the axial end surface of compressor housing 11 by a plurality of rivets 221. A small air gap is maintained between annular magnetic housing 21 and clutch rotor 15.

An outer terminal end of drive shaft 13 extends beyond tubular extension 12 and receives hub 24 which is fixed thereon by nut 25. Hub 24 includes tubular member 241, which is secured to the outer terminal end of drive shaft 13, and radial flange portion 242, which extends radially outward from the axial end of tubular member 241. Radial flange portion 242 is formed integrally with tubular member 241. Alternatively, radial flange portion 242 may be formed separately from, and then fixed to, tubular member 241, for example, by welding.

Annular armature plate 26 is made of a magnetic material, such as steel and is adapted to be arranged concentrically with hub 24. Annular armature plate 26 faces axial end plate portion 153 with a predetermined axial air gap therebetween and is flexibly connected to radial flange portion 242 through a plurality of leaf springs 27. Annular armature plate 26 includes friction surface 26a which faces friction surface 153a of axial end plate portion 153.

Stopper plate 28 and one end of a plurality of leaf springs 27 are secured by rivet 29 through spacer member 30 to an outer surface of radial flange portion 242. Specifically, the ends of leaf springs 27 are disposed on spacer member 30 such that the ends of leaf springs 27 are confined between the outer surface of radial flange portion 242 and the opposed surface of stopper plate 28. Radial flange portion 242 and stopper plate 28 are spaced apart by spacer member 30 to provide for limited deflection of the ends of leaf springs 27.

The other end of each of leaf springs 27 is fixed to annular armature plate 26 by rivet 31 to flexibly support annular armature plate 26 for axial movement upon deflection of leaf springs 27.

In operation, when electromagnetic coil 20 is excited in response to increased refrigeration demand, magnetic flux 50 is produced. Accordingly, annular armature plate 26 is attracted to axial end plate portion 153 by electomagnetic force, and friction surface 26a engages with friction surface 153a to receive the rotational force of clutch rotor 15. Therefore, the rotational force or torque from the automobile engine is transmitted to drive shaft 13 through clutch rotor 15, annular armature plate 26, leaf springs 27 and hub 24.

When electromagnetic coil 20 is demagnetized in response to reduced refrigeration demand, annular armature plate 26 is separated from clutch rotor 15 by the restoring force of leaf springs 27. The rotational force or torque from the automobile engine is no longer transmitted to drive shaft 13.

In systems such as that described in above-mentioned U.S. Patent No. 4,553,690, friction surface 26a of armature plate 26 and friction surface 153a of axial end plate portion 153 are not capable of being maintained in perfect parallel alignment with each other. Consequently, when armature plate 26 is attracted to axial end plate portion 153 by electromagnetic force in response to increased refrigeration demand, the radial outermost friction surface of armature plate 26 contacts the radial outermost friction surface of rotor 15 which, since these surfaces are metallic, produces an offensive noise for passengers in automobiles using such systems.

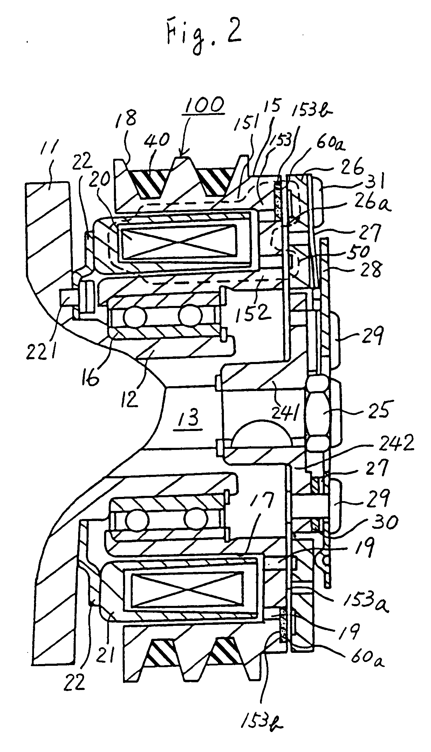

Referring to Figures 2, 3, 4, and 5, a nonmetallic fiber based friction member may be disposed on the friction surface of the rotor or armature plate to improve torque transmission therebetween. However, due to the inability to maintain the rotor and armature plate in perfect parallel alignment, the metallic, radial outermost surfaces of the armature plate and rotor still tend to collide at the initial moment when the rotor is attracted to the armature plate.

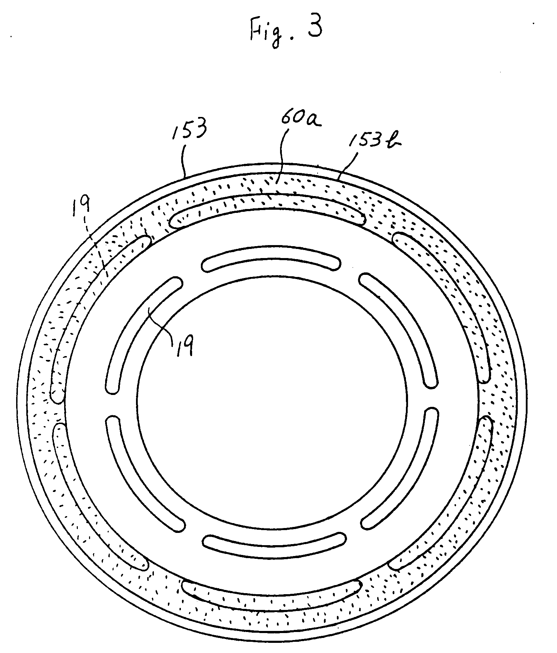

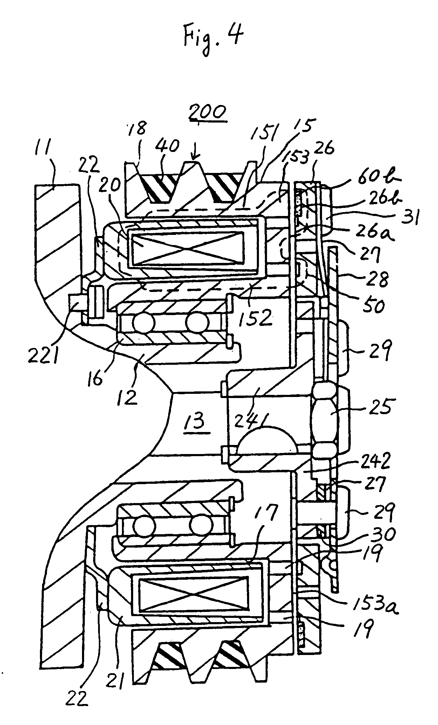

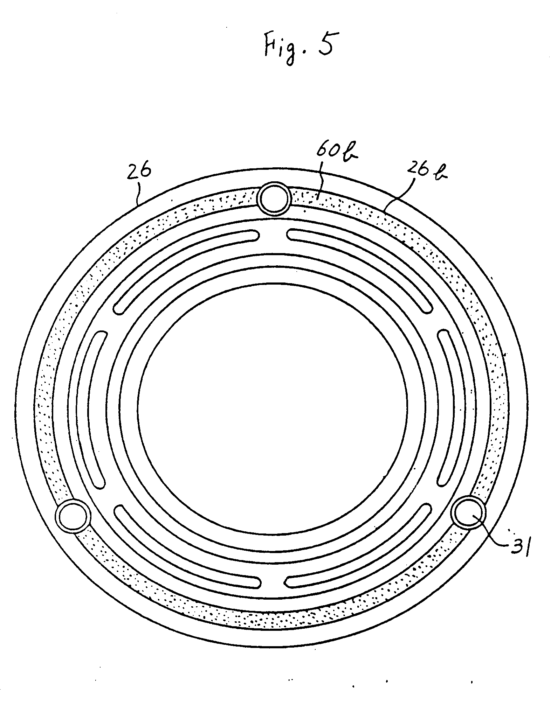

For example, Figures 2 and 3 essentially illustrate an embodiment of Japanese Utility Model Application Publication No. 62-149629, which shows annular friction member 60a fixedly disposed in annular groove 153b formed at a near radial outermost surface of friction surface 153a of axial end plate portion 153 of rotor 15. Conversely, Figures 4 and 5 essentially illustrate an embodiment of Japanese Utility Model Application Publication No. 52-151258, which shows annular friction member 60b fixedly disposed in annular groove 26b formed at a near radial outermost surface of the friction surface 26a of armature plate 26. In above-mentioned Figures 2, 3, 4 and 5, the same numerals are used to denote the corresponding elements shown in Figure 1.

As shown in the above-mentioned prior art, a collision of the metallic radial outermost surfaces of the friction surface of the armature plate and rotor occurs at the initial moment when the rotor is attracted to the armature plate. This produces a noise that is offensive to passengers in an automobile. Although the enhancements in the prior art include non-metallic fiber based friction members disposed on the friction surfaces of the rotor or armature plate, the radial outermost surfaces of the rotor or armature plate still collide and the offensive noise is still produced.

Accordingly, it is an object of the present invention to provide an electromagnetic clutch having a structure to reduce offensive noise.

According to US-A-3565223, an electromagnetic clutch includes a first rotatable member made of magnetic material and having a first friction surface, a second rotatable member, an annular magnetic armature plate having a second friction surface and coupled to the second rotatable member so as to be capable of limited axial movement, the first friction surface facing the second friction surface with an axial air gap therebetween, an electromagnetic means associated with the first rotatable member and the annular magnetic armature plate for attracting the second friction surface to the first rotatable member such that rotatable force may be transmitted to the second rotatable member, and an annular friction member of non-metallic material fixedly disposed in an annular cut-out portion in at least one of the first and second friction surfaces ; and, according to the present invention, such a clutch is characterised in that the annular cut-out portion is formed at the outermost radial portion of the friction surface.

In the accompanying drawings :

Figure 1 is a vertical longitudinal section of a conventional electromagnetic clutch.

Figure 2 is a vertical longitudinal section of a second conventional electromagnetic clutch.

Figure 3 is a vertical lateral section of the rotor shown in Figure 2.

Figure 4 is a vertical longitudinal section of the third conventional electromagnetic clutch.

Figure 5 is a vertical lateral section of the armature plate shown in Figure 4.

Figure 6 is a vertical longitudinal section of an electromagnetic clutch in accordance with a first embodiment of the present invention.

Figure 7 is a vertical lateral section of the armature plate shown in Figure 6.

Figure 8 is a vertical longitudinal section of an electromagnetic clutch in accordance with a second embodiment of the present invention.

Figure 9 is a vertical lateral section of the rotor shown in Figure 8.

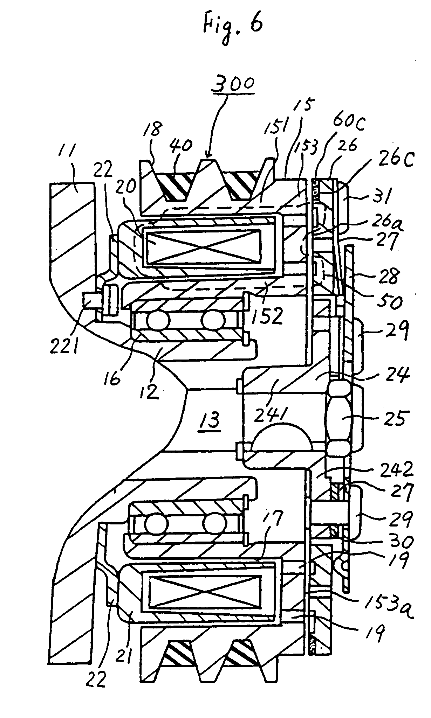

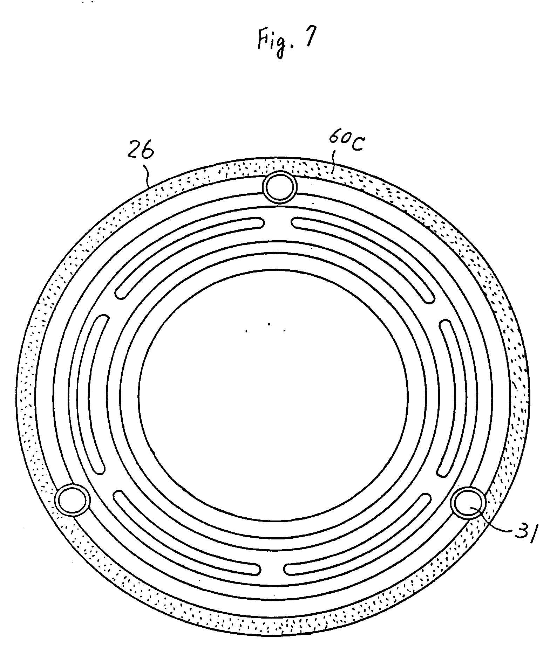

Figures 6 and 7 illustrate an electromagnetic clutch in accordance with a first embodiment of the present invention. The same numerals are used in Figures 6 and 7 to denote the corresponding elements shown in Figure 1. Annular friction member 60c made of non-metallic material such as, for example, aromatic polyamide resin fiber (trademark named "Kevlar") in molded phenol resin, is fixedly disposed in annular cut-out portion 26c of rectangular cross-section formed at the radial outermost friction surface of armature plate 26.

In operation, when electromagnetic coil 20 is energized, armature plate 26 is attracted to axial end plate portion 153 of rotor 15 in the following manner. During the initial time period after electromagnetic coil 20 is energized, the portion of radial outermost annular friction member 60c which is positioned closest to friction surface 153a of rotor 15 makes contact with friction surface 153a. This initial contact is caused by the imperfect parallel alignment of friction surface 26a of armature plate 26 with friction surface 153a of rotor 15. After the initial contact between the closest portions is made, the remaining portions of friction surface 26a make contact with the remaining portions of friction surface 153a, and the rotational force from the automobile engine is transmitted to drive shaft 13 through rotor 15, armature plate 26, leaf springs 27 and hub 24.

In accordance with the above-described operation of the present invention, the initial metallic collision between friction surface 26a of armature plate 26 and friction surface 153a of rotor 15 in electromagnetic clutch 10 is eliminated because the initial contact is made between non-metallic annular friction member 60c and friction surface 153a. This operation of the present invention reduces the offensive noise for automobile passengers but still maintains the enhanced transmission of torque from rotor 15 to armature plate 26.

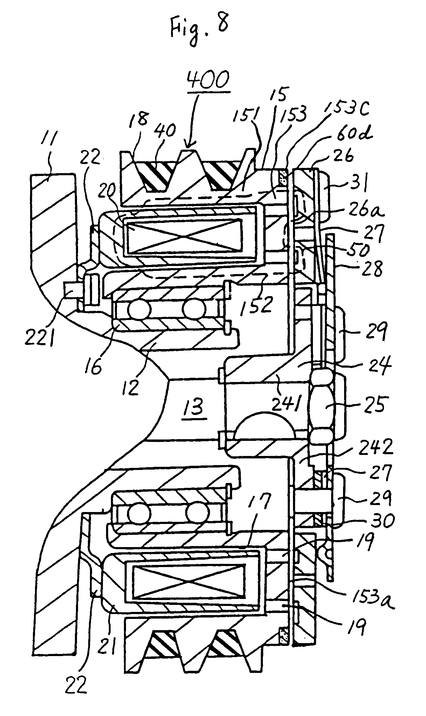

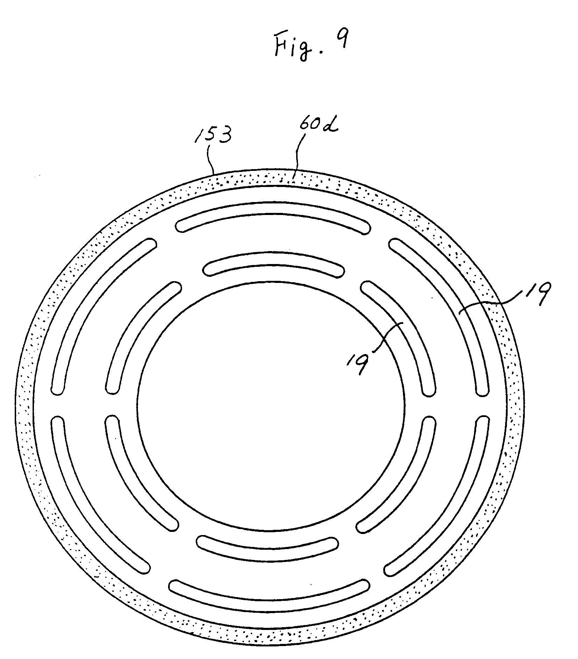

Figures 8 and 9 illustrate an electromagnetic clutch in accordance with a second embodiment of the present invention. The same numerals are used in Figures 8 and 9 to denote the corresponding elements shown in Figure 1. In this embodiment, annular friction member 60d is fixedly disposed in annular cutout portion 153c formed at the radial outermost friction surface of rotor 15. The operation and effects of this embodiment are omitted because they are similar to those of the first embodiment.

Although the above-described embodiments illustrate annular cut-out portions of rectangular cross-section, the invention is not limited in this respect. For example, a plurality of cut-out portions may be formed at predetermined postions at the radial outermost friction surfaces to reduce impact noise. Various cross-sections may also be used.

## Claims

1. An electromagnetic clutch including a first rotatable member (15) made of magnetic material and having a first friction surface (153a), a second rotatable member (13), an annular magnetic armature plate (26) having a second friction surface (26a) and coupled to the second rotatable member so as to be capable of limited axial movement, the first friction surface (153a) facing the second friction surface (26a) with an axial air gap therebetween, an electromagnetic means (20) associated with the first rotatable member and the annular magnetic armature plate for attracting the second friction surface to the first rotatable member such that rotational force may be transmitted to the second rotatable member, and an annular friction member (60c, 60d) of non-metallic material fixedly disposed in an annular cut-out portion (26c, 153c) in at least one of the first and second friction surfaces ; characterised in that the annular cut-out portion is formed at the outermost radial portion of the friction surface.

2. A clutch according to claim 1, wherein the annular friction member (60c, 60d) comprises an aromatic polyamide resin fibre in moulded phenol resin.

3. A clutch according to claim 1 or claim 2, wherein the first rotatable member (15) and the annular magnetic armature plate (26) comprise a magnetic metallic material.

4. A clutch according to any one of the preceding claims, wherein the annular cut-out portion (153c) is formed in the first friction surface (153a).

5. A clutch according to any one of claims 1 to 3, wherein the annular cut-out portion (26c) is formed in the second friction surface (26a).

6. A clutch according to any one of preceding claims, wherein the cut-out portion (26c, 153c) has a rectangular cross-section.

## Patentansprüche

1. Elektomagnetische Kupplung mit einem aus einem magnetischen Material gemachten und eine erste Reibungsoberfläche (153a) aufweisenden ersten drehbaren Teil (15), einem zweiten drehbaren Teil (13), einer ringförmigen magnetischen Ankerplatte (26), die eine zweite Reibungsoberfläche (26a) aufweist und die mit dem zweiten drehbaren Teil so verbunden ist, daß sie zu einer begrenzten axialen Bewegung in der Lage ist, wobei die erste Reibungsoberfläche (153a) der zweiten Reibungsoberfläche (26a) mit einem axialen Luftspalt dazwischen gegenübersteht, einer elektromagnetischen Einrichtung (20), die mit dem ersten drehbaren Teil und der ringförmigen magnetischen Ankerplatte assoziiert ist zum Anziehen der zweiten Reibungsoberfläche zu dem ersten drehbaren Teil so, daß Rotationskaft zu dem zweiten drehbaren Teil übertragen werden kann, und einem ringfömigen Reibungsteil (60c, 60d) aus nicht nichtmetallischem Material, das fest in einem ringförmigen ausgeschnittenen Abschnitt (26c, 153c) in mindestens einer der ersten und zweiten Reibungsoberfläche vorgesehen ist ; dadurch gekennzeichnet, daß der ringförmige ausgeschnittene Abschnitt in dem äußersten radialen Abschnitt der Reibungsoberfläche gebildet ist.

2. Kupplung nach Anspruch 1, bei der das ringförmige Reibungsteil (60c, 60d) eine aromatische Polyamidharzfiber in gegossenem Phenolharz aufweist.

3. Kupplung nach Anspruch 1 oder 2, bei der das erste drehbare Teil (15) und die ringförmige magnetische Ankerplatte (36) ein magnetisches metallisches Material aufweisen.

4. Kupplung nach einem der vorhergehenden Ansprüche, bei der der ringförmige ausgeschnittene Abschnitt (153c) in der ersten Reibungsoberfläche (153a) gebildet ist.

5. Kupplung nach einem der Ansprüche 1 bis 3, bei der der ringförmige ausgeschnittene Abschnitt (26c) in der zweiten Reibungsoberfläche (26a) gebildet ist.

6. Kupplung nach einem der vorhergehenden Ansprüche, bei der der ausgeschnittene Abschnitt (26c, 153c) einen rechteckigen Querschnitt aufweist.

## Revendications

1. Embrayage électromagnétique comprenant un premier élément rotatif (15) réalisé en un matériau magnétique et muni d'une première surface de friction (153a), un second élément rotatif (13), une plaque d'armature magnétique annulaire (26) munie d'une seconde surface de friction (26a) et couplée au second élément rotatif de manière à pouvoir effectuer un mouvement axial limité, la première surface de friction (153a) venant en face de la seconde surface de friction (26a) avec un entrefer d'air axial entre les deux, un dispositif électromagnétique (20) associé au premier élément rotatif et à la plaque d'armature magnétique annulaire pour attirer la seconde surface de friction contre le premier élément rotatif de façon que la force d'entraînement en rotation puisse être transmise au second élément rotatif, et un élément de friction annulaire (60c, 60d) en un matériau non métallique monté de façon fixe dans une partie de découpe annulaire (26c, 153c) de l'une au moins de la première surface de friction et de la seconde surface de friction ; embrayage caractérisé en ce que la partie de découpe annulaire est formée dans la partie radialement la plus à l'extérieur de la surface de friction.

2. Embrayage selon la revendication 1, caractérisé en ce que l'élément de friction annulaire (60c, 60d) est constitué par une fibre de résine polyamide aromatique dans une résine de phénol moulée.

3. Embrayage selon l'une quelconque des revendications 1 et 2, caractérisé en ce que le premier élément rotatif (15) et la plaque d'armature magnétique annulaire (26) sont réalisés en un matériau métallique magnétique.

4. Embrayage selon l'une quelconque des revendications précédentes, caractérisé en ce que la partie de découpe annulaire (153c) est formée dans la première surface de friction (153a).

5. Embrayage selon l'une quelconque des revendications 1 à 3, caractérisé en ce que la partie de découpe annulaire (26c) est formée dans la seconde surface de friction (26a).

6. Embrayage selon l'une quelconque des revendications précédentes, caractérisé en ce que la partie de découpe (26c, 153c) présente une section trans-versale rectangulaire.

Fig. 1

# Fig. 2

Fig. 3

Fig. 4

Fig. 5

Fig. 6

Fig. 7

Fig. 8

Fig. 9